# EUROPEAN PATENT SPECIFICATION

(11) **EP 3 208 635 B1**
(45) Date of publication and mention of the grant of the patent: **23.01.2019**
(21) Application number: 17154982.7
(22) Date of filing: 07.02.2017
(51) Int. Cl.: G01S 17/02, G01S 13/86, G01S 17/93, G01S 13/93, G01S 17/66, G01S 13/72

(54) **VISION ALGORITHM PERFORMANCE USING LOW LEVEL SENSOR FUSION**
BILDVERARBEITENDER ALGORITHMUS BASIEREND AUF NIEDRIGSCHWELLIGER FUSION VON SENSORDATEN
ALGORITHME DE TRAITEMENT D'IMAGES BASÉ SUR LE FUSIONNEMENT D'INFORMATIONS DE BAS NIVEAU DE CAPTEURS

(30) Priority: 19.02.2016 US 201615047863
(43) Date of publication of application: 23.08.2017
(73) Proprietor: Aptiv Technologies Limited, St. Michael (BB)
(72) Inventor: IZZAT, Izzat H., Oak Park, CA 91377 (US); MV, Rohith, Sunnyvale, CA 94085 (US)
(74) Representative: Robert, Vincent

(56) References cited:
- US-A1- 2004 178 945
- US-A1- 2006 125 679
- US-A1- 2010 104 138
- US-B1- 6 792 147
- US-B2- 7 756 298

## Description

### TECHNICAL FIELD OF INVENTION

Described herein are techniques for fusing Radar/LiDAR information with camera information to improve vision algorithm performance. The approach uses low level fusion where raw active sensor information (detection, range, range-rate, and angle) are sent to the vision processing stage. The approach takes advantage of active sensor information early in vision processing. The disclosure is directed to Advanced Driver Assistance Systems (ADAS) and autonomous vehicles. In these systems, multiple sensors are used to detect obstacles around the vehicle.

### BACKGROUND OF INVENTION

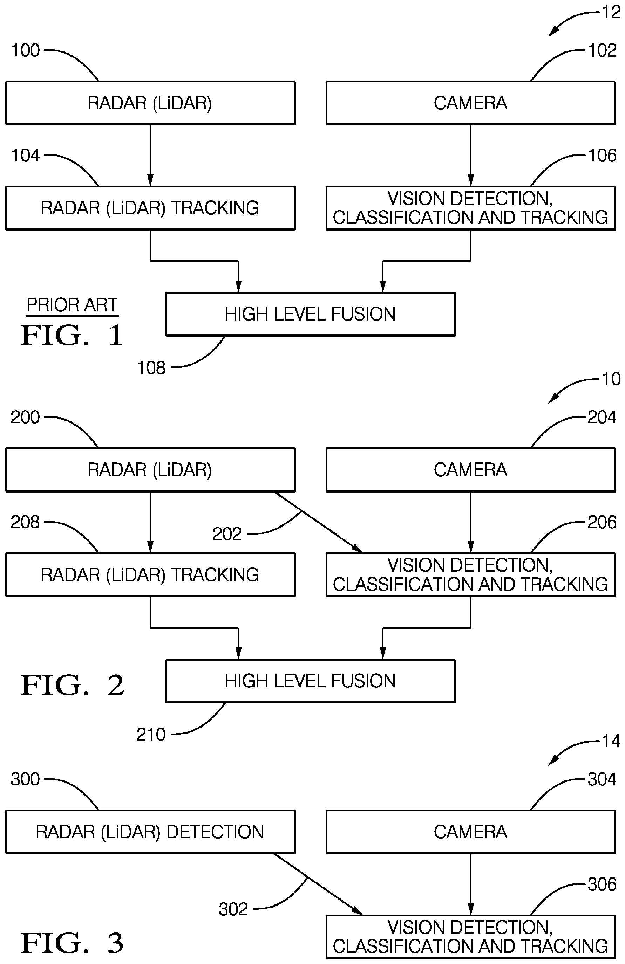

Current ADAS and autonomous vehicle systems use multiple sensors to detect obstacles around the vehicle. Most fusion systems use high level fusion as shown in the Fig 1. In the figure, Radar 100 generates Radar Detection unit (RDUs), and a camera 102 generates an image. Each sensor then processes the information 104, 106 independently. The information from each sensor is then merged 108 to confirm object detection. Simple fusion strategies are used such as AND/OR etc. Using AND strategy, for example, means that both sensors must agree before a detection is declared valid.

Described herein is a technique for fusing Radar (LiDAR) and vision information so as to take advantage of the strength of each sensor at a low level. The benefit of the proposed approach is that it takes advantage of active sensor strength at a very early stage. The technique improves vision algorithms performance by providing useful information, such as range or range-rate, which cannot be easily computed from vision sensors.

There is limited work in the area of low level sensor fusion. An example of previous work is the European project SAVE-U, entitled RADAR SENSORS AND SENSOR PLATFORM USED FOR PEDESTRIAN PROTECTION BY Tons et al., and published by Research Gate, publication number 4092473. In the project, Radar and vision information are combined at both low and high levels. In the low level, Radar information is used to define a region of interest which can be further processed by other sensors. The approach target detection of pedestrian and bicycle. However other type of object can also be detected. Document US2006/125679A1 relates to an image processing system to be mounted to a vehicle

### SUMMARY OF THE INVENTION

In accordance with the present invention, an object detection system is provided. Embodiments of the invention are claimed in the dependent claims.

Various embodiments describe herein include methods and systems for using Radar (LiDAR) information to improve vision algorithms, wherein Radar (LiDAR) detections, Radar (LiDAR) range information, and Radar range-rate are used as input to vision algorithms.

In one exemplary embodiment of the present invention, a method for constructing region of interest from Radar (LiDAR) detection units (RDU) is presented, wherein RDU are used as points in the image domain to divide the image into free vs. occupied space. Only the occupied space is searched by the vision algorithms which results in significant saving in processing time. Free space may be searched at lower frequency to protect against miss detection by the active sensor.

In addition, in one embodiment of the present invention, RDUs are used to increase the confidence of vision detections since the presence of a detection increase the likelihood that an object is present.

A missed-vision-detection around an RDU can be an indication of the failure of vision algorithm to detect an object. In one exemplary embodiment of the present invention, image areas around the RDU are processed again with different parameters or different algorithms.

Even further, in one embodiment of the present invention, the number of RDUs in an image area is used as an indication of the size of the object for the purpose of object classification, for example, truck vs. vehicle. Also the speed of the object determined from RDU range rate can be used by the classifier to distinguish bicycle from motorbike.

In one exemplary embodiment of the present invention, a range map is determined from Radar (LiDAR) detection range information. The range map can be used by vision algorithms to decide on the scale of search to use, on determining Time To Contact (TTC), and for properly placing vision detection boxes on the ground.

In an alternative embodiment of the present invention, the speed of the object in the image is determined from RDU range rate information. This help vision tracking by limiting the search space in the next frame. It can also be used to improve classification results of the vision algorithms. For example, a high speed object cannot be classified as a pedestrian.

In another embodiment of the present invention, the height information from the LiDAR sensor can be used as a feature for object classification. This can help improve classification results and reduce false detections. An object longer than 8 meters, for example, is most likely a pool and not a pedestrian.

In accordance with one embodiment, an object detection system configured to detect an object proximate to a vehicle is provided. The system includes a radar-sensor, a camera, and a controller. The radar-sensor is used to detect a radar-signal reflected by an object in a radar-field-of-view. The camera is used to capture an image of the object in a camera-field-of-view that overlaps the radar-field of view. The controller is in communication with the radar-sensor and the camera. The controller is configured to determine a location of a radar-detection in the image indicated by the radar-signal, determine a parametric-curve of the image based on the radar detections, define a region-of-interest of the image based on the parametric-curve derived from the radar-detection, wherein the region-of-interest is a subset of the camera-field-of-view, and process the region-of-interest of the image to determine an identity of the object.

### BRIEF DESCRIPTION OF DRAWINGS

The present invention will now be described, by way of example with reference to the accompanying drawings, in which:
Fig. 1 depicts a typical flow diagram of high level fusion;
Fig. 2 depicts the proposed low level fusion flow diagram with Radar (LiDAR) processing;
Fig. 3 depicts the proposed low level fusion flow diagram without Radar (LiDAR) processing;
Figs. 4A and 4B in combination depict an example of constructing a region of interest based on Radar (LiDAR) detections;
Fig. 5 depicts an proposed method for using RDUs to adjust confidence and class type of vision objects;
Figs. 6A and 6B depict two examples of building range map from RDUs range information;
Fig. 7 depicts an example of constructing a range map using Radar (LiDAR) range information;
Figs. 8A and 8B depict an illustration of tracking using RDU range-rate; and
Fig. 9 depicts a block diagram of the system.

It should be understood that the drawings are for purposes of illustrating the concepts of the invention and are not necessarily the only possible configuration for illustrating the invention.

### DETAILED DESCRIPTION

The present principles advantageously provide a method and system for improving vision detection, classification and tracking based on RDUs. Although the present principles will be described primarily within the context of using Radar (LiDAR), the specific embodiments of the present invention should not be treated as limiting in the scope of the invention. For example, in an alternative embodiment of the present invention, a Light Emitting Diode (LED) sensor may be used.

In ADAS and automated driving systems, sensors are used to detect, classify, and track obstacles around the host vehicle. Objects can be Vehicles, Pedestrian, or unknown class referred to as general objects. Typically two or more sensors are used to overcome the shortcoming of single sensor and to increase the reliability of object detection, classifications, and tracking. The output of the sensors are then fused to determine the list of objects in the scene. Fusion can be done at a high level where every sensor is processed independently with fusion done at the end or at a low level where one sensor is used by another sensor at an early stage of processing. A combination of these fusion methods is also possible. Without loss of generality, the system and method presented herein focuses on ADAS and Radar. In general, LiDAR provide more accurate and denser data and hence can result in better performance than Radar.

Figs. 2 and 3, show two possible implementation of the proposed approach. In the figures, Radar 200, 300 provides information 202, 302 to the vision system 204, 304 early in algorithm processing to allow it to detect, classify, and track objects 206, 306 more effectively. The most useful information that Radar can provide in addition to RDUs are the range and range-rate. This information can benefit vision algorithms in a number of ways as will be described below.

Fig. 2 illustrates a non-limiting example of a system 10 that is an improvement over the prior-system 12 shown in Fig. 1 where radar 200 processing can proceed similar to what is currently done in high level fusion 208. Radar detections are used to build tracks and classify objects. These tracks can then be fused with vision tracks 210. Fig. 3 shows a different non-limiting implementation of a system 14 where no radar processing is performed. In this implementation, vision is used as the primary sensor for detection, classification, and tracking. This takes advantage of the strength of each sensor (Radar - Range & Range-rate, Vision - Classification/Tracking) and reduces the time needed for processing radar detections.

Monocular vision system has been popular for ADAS applications due to its low cost and effectiveness in determining object class. To detect objects, a dataset of labeled image windows of fixed size (e.g. - n × m) are built. The database includes both positive and negative examples of the object to be detected (e.g. vehicle). A classifier is then trained to tell these windows apart. Every n x m window is then passed to the classifier for processing. Windows that the classifier labels positive contain the object, and those labeled negative do not. Object detection and classification can be done separately i.e. first detect then classify or detect/classify at the same. Detected objects are then tracked in the temporal domain using, for example, the centroid of the object window.

This search for objects in vision systems is typically done in sliding window fashion [Computer vision a Modern approach, by Forsyth and Ponce, Publisher: Pearson, 2nd edition 2011] starting from the top left corner of the image to the lower right. Since not all instances of an object will be the same size in the image, search must be done over multiple scales. Typically three or more scales are used depending on processing power available. The sliding window detection is well behaved in practice with different applications requiring different choices of feature. However the processing requirements are very high which limits the types and number of objects that can be searched.

To speed up the search for objects, in one embodiment, RDUs are used to construct a boundary curve that divides the image into free and occupied space. The resulting occupied space is the only region that needs to be searched by the vision algorithm and since it is usually smaller than the full image; it results in significant processing time saving to the sliding window algorithm.

To construct the free space boundary, RDUs are first mapped to image domain. The mapping of one sensor to another is well known in the art. It involves knowing the locations of the camera and Radar and defining a rotation and translation parameters to associate each RDU with an (x, y) location in the image space. Once RDUs are mapped into the image, they are treated as image points and fitted by a curve that extends across the image in the horizontal direction. Curve fitting is the process of constructing a curve that best fit a series of data points.

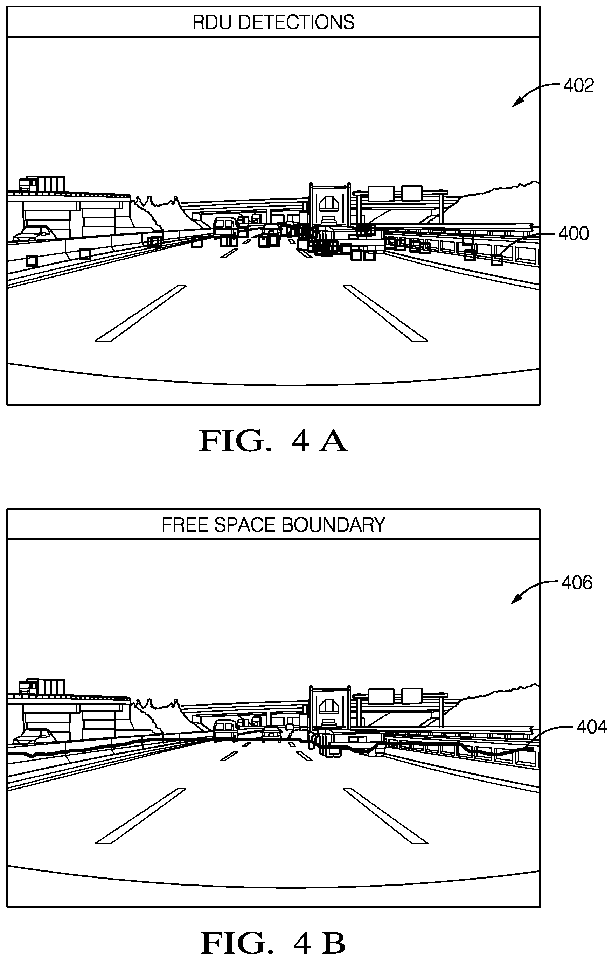

In one embodiment, the boundary curve is constructed from line segments that connect two RDUs. Staring from the left most RDU, a line is built between two consecutive RDU locations. The process continues until the right most RDU is reached. Many line fitting techniques can be used. In one embodiment, the well-known line DDA (Digital Differential Algorithm) is used which sample the line at regular intervals between the end points. The advantage is in its simplicity and speed. This can be followed by image dilation and erosion to create a smoother curve. Fig. 4 present an example of free space creation from Radar Detection units (RDUs 400) where RDUs overlaid on the image 402 are represented as white squares. The resulting free space boundary curve (the parametric-curve 404) is shown in Fig. 4B overlaid on the camera image 406.

In another embodiment, a parametric curve may be fitted to the RDUs. There are significant amount of work in the literature on curve fitting. For example, Splines has been widely used as mathematical way to express curves. A spline is defined as a piecewise polynomial function whose derivatives satisfy some continuity constraints. It should be noted that Spline is one example of curves and many others can be used for the purpose of building the boundary curve from RDUs.

In vision algorithm a confidence value is usually associated with vision detection and classification. The confidence value represents how close the object in the current window is to the images in the training database. The confidence value can be a single value if a single level classifier is used or multiple values where each value is associated with a classifier level in cascade classification. The confidence value is typically scaled to a value between 0-1. Many algorithms rely on the confidence value for high level processing. In one embodiment, RDUs are used to increase or decrease the confidence level in the detection. A simple additive or subtractive strategy can be used such as;

If an RDU exist inside the vision detection box, Confidence = Confidence + α * x, where x is the number of RDUs inside the vision detection window, and α is used to control the influence of RDUs on vision confidence. In most cases, RDU should not completely control the confidence value of the vision detection. A max value of 0.1 can be used as an upper limit to the term α*x.

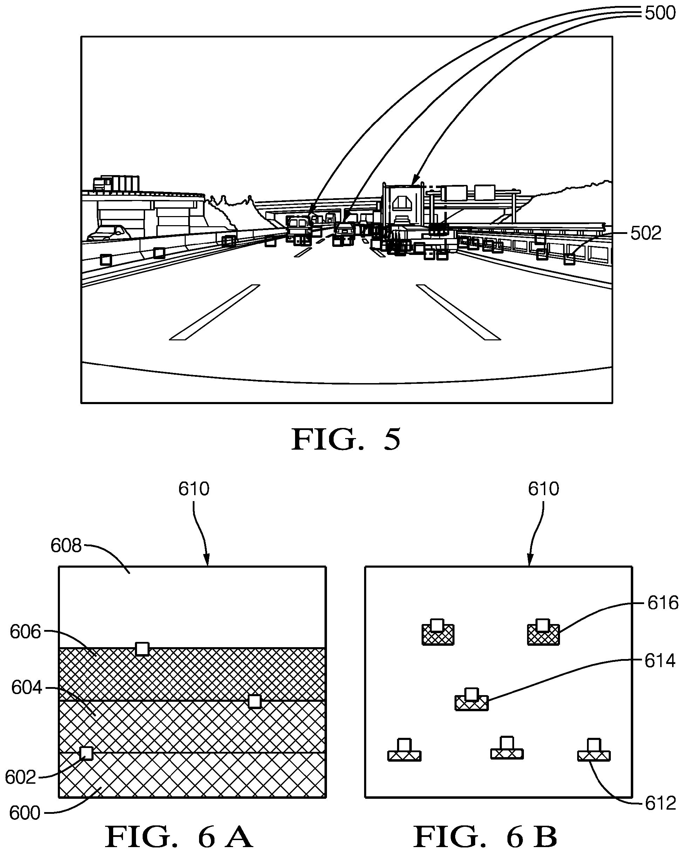

Similarly, a penalty value of -0.1 is deducted from confidence if no RDUs are present inside the vision detection window. Since Radar has poor azimuth angle, vision window can be slightly expanded for the purpose of confidence calculation. Fig. 5 demonstrates using the confidence adjustment principle of vehicle detection. In the figure, an example of vision detection boxes 500 and overlaid RDUs 502 are shown.

In another embodiment, the number of RDUs can be used to influence classification results. For example, large number of detections in a vision window is an indication of the presence of large object such as a truck. This concept is also illustrated in Fig. 5 with vision detected boxes 500 overlaid on the image. In the figure, large number of RDUs 502 are present closer to the truck as compared to a vehicle.

In other embodiments, RDUs are used as a secondary object detection indicator. For example, if vision did not detect an object close to an RDU, it can be an indication that the vision algorithm missed the object due, for example, to large variations between the object in the window and what the vision algorithm is trained to detect. The vision algorithm can then adjust some of the parameters close to an RDU to allow the missed object to be detected. One typical example is to adjust the threshold value for detection and/or classification. The threshold value measures how close, for example 80%, the features detected in the window to what is expected for this object. Near an RDU, the threshold value can be reduced to, for example, 70%. This may allow the object to be detected by the vision algorithm and avoid relying completely on RDUs to decide on object detection. In yet another embodiment, different features can be computed or different algorithm can be used around an RDU if processing resources and time are available.

Range (or depth map) is important for many ADAS applications. In computer vision, structure from motion or stereo camera can be used to estimate a depth map. This typically does not provide sufficient density in the case of structure from motion or expensive using stereo camera in either hardware (two cameras) or software (disparity algorithms). RDU range is used to build an approximate range map. The range map can be used to reduce the search space in the sliding window algorithm, to estimate Time to contact (TTC), and to probably place or resize vision detection box.

In one embodiment, the range map is constructed as shown in Fig. 6A. In the figure, RDU detections are shown as a black square and gray scale values represent distance from the bottom of the image. The range map is constructed as follows. Let us use the range value at the lowest part 600 of the image as zero. Considering the RDU in the lower left part of the image 602, the range value of the RDU is used as the ceiling of the range from the lowest part of the image and the range is gradually increased from zero to the celling in the lowest box 600. Now the top location of the lowest box 600 in the image is used as the range floor. The second square 604, is defined from the ceiling of the lowest box to the RDU range value of the RDU detection in the middle right of the image. This process is repeated until the last RDU is reached. No range values are assigned if no RDUs are available such as the top box 608.

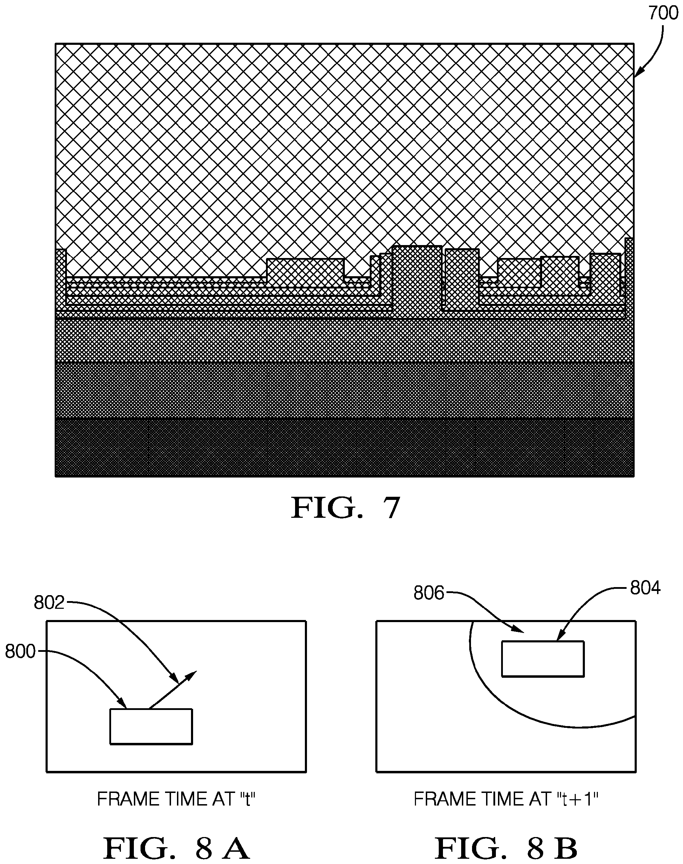

In another embodiment, the range image 610 is defined as shown in Fig. 6B. In the figure, a range value is defined from RDU 612 range value and assigned to all pixels in the neighborhood of the detection 614, 616. The size of the neighborhood depends on the distance from the camera, the number of RDUs, and the Radar type used. The two methods can be combined as shown in Fig. 7 where the method in Fig. 6A is used for short range and the method in Fig 6B is used for far range 700.

The range map has a number of uses in vision algorithm. In one embodiment, the range map is used to decide the number of scale to use in the vision processing algorithm. As an example if the object is far away (large range value), only one scale or two scales are used in the sliding window algorithm. This can result in significant saving in processing time.

In another embodiment, the range map is used for TTC calculation. The TTC use the free space in front of the vehicle to estimate the time to reach an object in front of the image. TTC can be defined as TTC = Range/Velocity, where range is estimated from the range map and Velocity is defined as the relative speed of the host vehicle minus the speed of the target object. The target object speed can be computed from the RDU range-rate.

In one embodiment, the location and size of the detection box can be adjusted based on the range map. For example, it is well known in the art [Robust range estimation with a monocular camera for vision based forward collision warning system, K. Park and S. Hwang, Scientific world journal Jan 2014], that if the real width of a vehicle is known, the vehicle width in the image can be defined using the formula: Vehicle width in image = Camera focal length * (Real Vehicle width /Z), where Z is the range in front of the camera. Using certain value for real vehicle width such as 1.4 m - 2 m, the width of the image can be estimated. The projection of object into the image can be estimated as follows. A point in the road at Z will project to the image at a height y, where y is given by y = focal length * (camera height/Z)

Since Z is known from the range map, the height of the object y can be estimated. The analysis assumes that the camera is mounted so that the optical axis is parallel to the road surface. Similar analysis can be done if the camera is pitching down.

In an embodiment, RDU range-rate is used to improve tracking speed and accuracy. In vision tracking, an object detected at time "t" can be tracked at time "t+1" by searching the image to find the best match to the image window at time "t" in the image at "t+1". If no information on the object speed is available, the search area would be large and hence time consuming. If the search space is large, you may also end up matching the wrong image window in the second frame. Using range-rate and possibly azimuth angle from RDU would help us better estimate how much an object moved and hence would help us focus the search in a smaller area of the image.

Fig. 8 illustrates the concept proposed in the above embodiment. In the figure, the detected object 800 at time "t" shown as a black box is tracked at time "t+1" 804. The arrow shown in the figure 802 can be computed from RDU range-rate and azimuth angle and allow us to define a search space 806 in the image at time "t+1". The search space is marked in white in the figure. Although Radar do not provide good azimuth angle to the target, it can still be used to limit the search space as shown in the figure.

In yet another embodiment, the RDUs range-rate can also be used to influence the classification results. As an example if an object window has an RDU with large range-rate (fast object) it can be used to increase the confidence of a vehicle class vs. truck or motorcycle vs. bicycle.

As mentioned earlier, LiDAR can be used in similar way to compute free space and range map. Since LiDAR provides more accurate and denser data, free space and range map can be estimated with higher accuracy. The approach can be very useful for sparse LiDAR where only limited measurements are available during the LIDAR scan. However, LiDAR cannot, in general, provide range-rate and hence cannot be used to improve tracking, for example.

In one embodiment, LiDAR height value can be used to improve vision detection in a number of ways. As an example, if vision detected object has a very large height value from LiDAR it can be used an indication that vision detection is not correct and hence is discarded. In another example, if LiDAR height value of detected object is small, vision detection may be discarded.

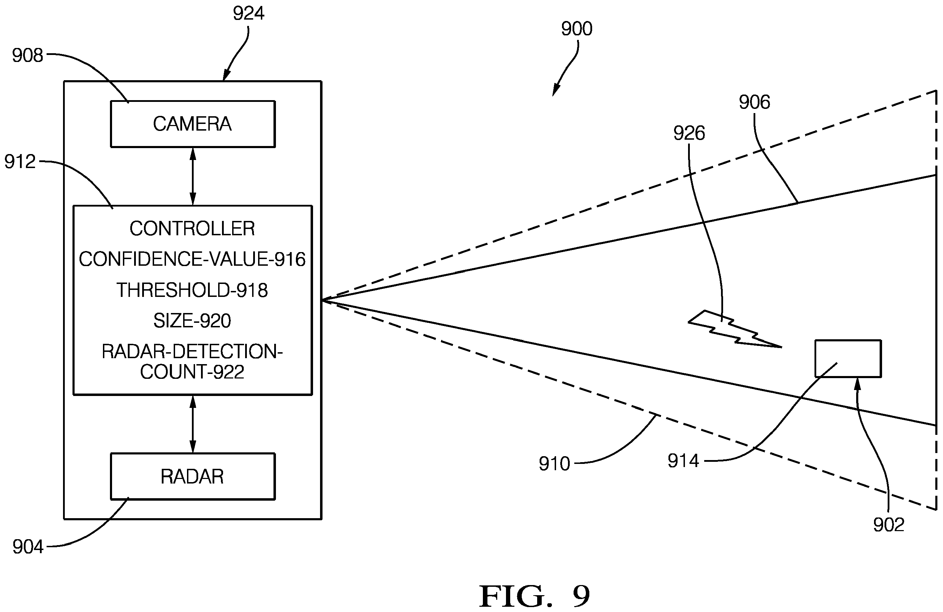

Fig. 9 illustrates a non-limiting example of an object-detection system 900 configured to detect an object 902 proximate to a vehicle 924. The system 900 includes a radar-sensor 904 that is used to detect a radar-signal 926 reflected by an object in a radar-field-of-view 906. The system 900 also includes a camera 908 used to capture an image 402 (Fig. 4) of the object 902 in a camera-field-of-view 910 that overlaps the radar-field-of-view 906. The system 900 is generally configured to combine information from the radar-sensor 904 and the camera 908 in a manner that takes advantage of the strengths of these two devices and thereby compensating for the weaknesses of the radar-sensor 904 and the camera 908.

To this end, the system 900 also includes a controller 912 in communication with the radar-sensor 904 and the camera 908. The controller 912 is configured to determine a location of a radar-detection 400 in the image indicated by the radar-signal 926, determine a parametric-curve 404 of the image 402 based on the radar detections, define a region-of-interest 406 of the image 402 based on the parametric-curve 404 derived from the radar-detection. Preferably, the region-of-interest 406 is a subset of the camera-field-of-view 910. The parametric-curve 404 helps to reduce the amount of image processing by limiting the area of the image 402 that is processed because objects of interest are not expected outside of the region-of-interest 406. As such, the controller 912 is configured to process the region-of-interest 406 of the image to determine an identity 914 of the object.

Since the object of interest are expected to be further away from the vehicle 924 than the boundary defined by the parametric-curve 404, the controller 912 is configured to define the region-of-interest 406 as being above the parametric-curve 404.

In order to determine when something detected in the image 402 has been adequately analyzed, the controller 912 may be configured to determine a confidence-value 916 of the identity 914 of the object 902 based on the image, and vary the confidence-value 916 based on the radar-detection.

When the controller detects the object based on the radar-signal and does not detect the object in the image, the controller 912 may decrease a threshold 918 used by the controller to process the image.

The controller 912 may be configured to determine a size 920 of the object based on a radar-detection-count 922 associated with the object.

While this invention has been described in terms of the preferred embodiments thereof, it is not intended to be so limited, but rather only to the extent set forth in the claims that follow.

## Claims

1. An object-detection system (900) configured to detect an object (902) proximate to a vehicle (924), said system (10) comprising:
a radar-sensor (904) used to detect a radar-signal (926) reflected by an object (902) in a radar-field-of-view (906);
a camera (908) used to capture an image (402) of the object (902) in a camera-field-of-view (910) that overlaps the radar (200)-field of view; and
a controller (912) in communication with the radar-sensor (904) and the camera (908), said controller (912) configured to determine a location of a radar-detection (400) in the image (402) indicated by the radar-signal (926), map the radar (200) detections into the image, determine a boundary curve (404) of the image (402) based on the radar (200) detections, define a region-of-interest (406) of the image (402) based on the boundary curve (404) derived from the radar-detection (400), wherein the region-of-interest (406) is a subset of the camera-field-of-view (910), and process the region-of-interest (406) of the image (402) to determine an identity (914) of the object (902),
**characterized in that** the boundary curve (404) is a curve that extends across the image in horizontal direction constructed by fitting the radar detections treated as image point by the curve.

2. The system (10) in accordance with claim 1, wherein the controller (912) is configured to define the region-of-interest (406) above the boundary curve (404).

3. The system (10) in accordance with claim 1 or 2, wherein the controller (912) is configured to determine a confidence-value (916) of the identity (914) of the object (902) based on the image (402), and vary the confidence-value (916) based on the radar-detection (400).

4. The system (10) in accordance with any one of claims 1 to 3, wherein when the controller (912) detects the object (902) based on the radar-signal (926) and does not detect the object (902) in the image (402), the controller (912) decreases a threshold (918) used by the controller (912) to process the image (402).

5. The system (10) in accordance with any one of claims 1 to 4, wherein the controller (912) is configured to determine a size (920) of the object (902) based on a radar-detection-count (922) in an image area.

## Patentansprüche

1. Objekterfassungssystem (900), das konfiguriert ist zum Erfassen eines Objekts (902) in der Nähe eines Fahrzeugs (924), wobei das System (10) aufweist:
einen Radarsensor (904), der verwendet wird zum Erfassen eines Radarsignals (926), das von einem Objekt (902) in einem Radar-Sichtfeld (906) reflektiert wird;
eine Kamera (908), die verwendet wird zum Aufnehmen eines Bilds (402) des Objekts (902) in einem Kamera-Sichtfeld (910), das das Radar-(200)-Sichtfeld überlappt; und eine Steuervorrichtung (912), die mit dem Radarsensor (904) und der Kamera (908) in Verbindung ist, wobei die Steuervorrichtung (912) konfiguriert ist zum Bestimmen einer Position einer Radarerfassung (400) in dem Bild (402), angegeben durch das Radar-signal (926), Abbilden der Radar-(200)-Erfassungen in das Bild, Bestimmen einer Abgrenzungskurve (404) des Bilds (402) basierend auf den Radar-(200)-Erfassungen, Definieren eines Bereichs von Interesse (406) des Bilds (402) basierend auf der Abgrenzungskurve (404), die von der Radarerfassung (400) abgeleitet ist, wobei der Bereich von Interesse (406) ein Teilsatz des Kamera-Sichtfelds (910) ist, und Verarbeiten des Bereichs von Interesse (406) des Bilds (402), um eine Identität (914) des Objekts (902) zu bestimmen,
**dadurch gekennzeichnet, dass** die Abgrenzungskurve (404) eine Kurve ist, die sich über das Bild in horizontaler Richtung erstreckt, konstruiert durch Angleichen der Radarerfassungen, die als Bildpunkt behandelt werden, durch die Kurve.

2. Das System (10) gemäß Anspruch 1, wobei die Steuervorrichtung (912) konfiguriert ist zum Definieren des Bereichs von Interesse (406) oberhalb der Abgrenzungskurve (404).

3. Das System (10) gemäß Anspruch 1 oder 2, wobei die Steuervorrichtung (912) konfiguriert ist zum Bestimmen eines Vertrauenswerts (916) der Identität (914) des Objekts (902) basierend auf dem Bild (402) und Variieren des Vertrauenswerts (916) basierend auf der Radarerfassung (400).

4. Das System (10) gemäß einem der Ansprüche 1 bis 3, wobei, wenn die Steuervorrichtung (912) das Objekt (902) basierend auf dem Radarsignal (926) erfasst und das Objekt (902) in dem Bild (402) nicht erfasst, die Steuervorrichtung (912) eine Schwelle (918) verringert, die von der Steuervorrichtung (912) verwendet wird, um das Bild (402) zu verarbeiten.

5. Das System (10) gemäß einem der Ansprüche 1 bis 4, wobei die Steuervorrichtung (912) konfiguriert ist zum Bestimmen einer Größe (920) des Objekts (902) basierend auf einem Radarerfassungszählwert (922) in einem Bildbereich.

## Revendications

1. Système de détection d'objet (900) configuré pour détecter un objet (902) à proximité d'un véhicule (924), ledit système (10) comprenant :
un détecteur de radar (904) utilisé pour détecter un signal de radar (926) réfléchie par un objet (902) dans un champ de vision de radar (906) ;
une caméra (908) utilisée pour capturer une image (402) de l'objet (902) dans un champ de vision de caméra (910) qui chevauche le champ de vision de radar (200) ; et
un contrôleur (912) en communication avec le détecteur de radar (904) et avec la caméra (908), ledit contrôleur (912) étant configuré pour déterminer un emplacement d'une détection de radar (400) dans l'image (402) indiquée par le signal de radar (926), pour cartographier les détections de radar (200) dans l'image, pour déterminer une courbe frontière (404) de l'image (402) sur la base des détections du radar (200), pour définir une région d'intérêt (406) de l'image (402) sur la base de la courbe frontière (404) dérivée de la détection de radar (400), dans lequel la région d'intérêt (406) est une zone partielle du champ de vision de caméra (910), et pour traiter la région d'intérêt (406) de l'image (402) afin de déterminer une identité (914) de l'objet (902),
**caractérisé en ce que** la courbe frontière (404) est une courbe qui s'étend à travers l'image en direction horizontale, construite en associant les détections de radar traitées à titre de points d'image par la courbe.

2. Système (10) selon la revendication 1, dans lequel le contrôleur (912) est configuré pour définir la région d'intérêt (406) au-dessus de la courbe frontière (404).

3. Système (10) selon la revendication 1 ou 2, dans lequel le contrôleur (912) est configuré pour déterminer une valeur de fiabilité (916) de l'identité (914) de l'objet (902) sur la base de l'image (402) et pour faire varier la valeur de fiabilité (916) sur la base de la détection de radar (400).

4. Système (10) selon l'une quelconque des revendications 1 à 3, dans lequel, quand le contrôleur (912) détecte l'objet (902) sur la base du signal de radar (926) et ne détecte pas l'objet (902) dans l'image (402), le contrôleur (912) diminue un seuil (918) utilisé par le contrôleur (912) pour traiter l'image (402).

5. Système (10) selon l'une quelconque des revendications 1 à 4, dans lequel le contrôleur (912) est configuré pour déterminer une taille (920) de l'objet (902) sur la base d'un décompte de détections de radar (922) dans une zone d'image.
